# EUROPEAN PATENT SPECIFICATION

(11) **EP 0 933 549 B1**
(45) Date of publication and mention of the grant of the patent: **11.06.2003**
(21) Application number: 99100251.0
(22) Date of filing: 08.01.1999
(51) Int. Cl.: F16D 27/06, F16H 27/06

(54) **Transmission device for rotary motion in steps, in particular in packing machines at high operating speeds**
Getriebe zur Erzeugung einer stufenweisen Drehbewegung, insbesondere für schnellaufende Verpackungsmaschinen
Dispositif de transmission pour un mouvement de rotation pas à pas en particulier pour machines d'emballage à haute vitesse

(30) Priority: 28.01.1998 IT SV980005
(43) Date of publication of application: 04.08.1999
(73) Proprietor: SASIB S.p.A., 40128 Bologna (IT)
(72) Inventor: Spada, Valter, 40043 Marzabotto (BO) (IT); Malossi, Stefano, 40139 Bologna (IT)
(74) Representative: Karaghiosoff, Giorgio Alessandro, Dott.

(56) References cited:
- EP-A- 0 728 666
- FR-A- 990 258
- GB-A- 1 212 814
- PATENT ABSTRACTS OF JAPAN vol. 006, no. 240 (M-174), 27 November 1982 & JP 57 137760 A (TOKYO SHIBAURA DENKI KK), 25 August 1982

## Description

The invention relates to a transmission device for rotary motion in steps, in particular in the cigarette packing machines at high speed of operation, comprising one input shaft, a kinematic chain of transmission of the motion to a spider that carries at least two tumblers which copperate with a maltese type cross , the said maltese type cross is connected dynamically to one or more operative parts to be driven, and wherein the spider that cooperates with the maltese type cross in the sense that it prevents the rotation in dynamically disengaged condition with one or more tumblers, and wherein a second spider is associated with the maltese type cross. A transmission device of this kind is known from the document GB-A-1212814.

The two tumblers are generally formed by rollers fitted on radial arms of a spider that is formed by a part revolving around its own axis that is parallel with the axis of the maltese type cross, and that carries in a pre-arranged position an axially projecting circular sector type surface of a preset angular amplitude.

The actual maltese type cross instead has radial slots of a width corresponding to the one of the rollers that form the tumblers and that are arranged angularly equidistant between each other in a manner corresponding to the radial length of the radial arms that carry the rollers of the tumblers. Between the radial slots of engagement of the tumblers, the maltese type cross has radial cavities the radially internal side of which is corresponding to the diameter of the axial surface or rib in form of a circular segment of the part that carries the arms of the tumblers and that constitute a so called spider.

The whole is dimensioned and synchronized in such a manner, whereby the rib in form of a circular segment of the spider is in position of engagement in the associated cavity, when the tumblers are not engaged in the corresponding slots of engagement, preventing the maltese type cross from rotating around their axis, while said radial rib in form of a circular segment of the spider is in position of non interference with the maltese type cross during the periods of engagement of the rollers of the tumblers in the corresponding slots. The rotation of the spider with the tumblers determines therefore the advancement in rotary steps of a preset amplitude. The use of a double tumbler, generally of two tumblers oriented diametrically opposite, that is with a phase shift of 180 degrees, allows for keeping the frequency of the steps of advancement, cutting in half the speed of rotation- of the very tumbler and therefore the kinetic energy or the torque of this latter and of the inertial mass of the drive transmission associated with the tumbler.

When the rotary motion in steps has to be very fast and precise, it becomes advantageous to associate a further spider that cooperates with the maltese type cross in an angular position different from the first spider that carries the tumblers.

The second spider that is made analogous to the first one must therefore rotate in a synchronized manner with the tumblers, taking up the position of non interference with the maltese type cross when these engage in the corresponding slots to cause the execution of the steps of advancement of the very maltese type cross.

In practically making a device of this type it occurred that the synchronized handling of the second spider can be obtained only in a very complex manner, that is thanks to mechanisms transforming the motion taken from the kinematic drive chain of the first spider that are complex, expensive, bulky and that present considerable inertial masses.

The problem becomes still more dramatic when, for the purpose of increasing the time neccessary for executing steps of advancement, relative to dwell times, the drive of the first spider that carries the tumblers is carried out deriving the motion of the input shaft of the device with the help of a transmission that slows down the rotation of the spider and the tumblers during the phase of the step of advancement of the maltese type cross and accelerates the rotation of the same during the dwell time, obtaining in this manner minor accelerations and decelerations , minor torques and minor maximum speeds of the maltese cross and therefore of the units driven by the same.

In this case, in fact, the eventual transmission of derivation of the motion for the second spider becomes still more complex, if not most difficult to make.

Therefore the invention is based on the problem to make a device of the type described at the beginning, in such a manner, whereby it is possible to foresee at least one double tumbler, with at least two spiders that operate in a manner perfectly synchronized between each other, the whole thanks to simple means, of low cost of reliable and precise operation and easy to make.

The invention solves the above problem with a device of the type described at the beginning, in which the second spider is given an oscillating or rotary alternating motion between a position of engagement and a position of disengagement with the maltese type cross (11).

In one form of execution, the second spider has a revolving part with an axially projecting surface which is shaped in form of a circular segment and that cooperates with the corresponding cavities of the maltese type cross, that said surface has an angular extension below 90 degrees, while the revolving part is given an oscillating motion around its own axis.

The oscillating motion can be achieved thanks to any extremely simple transmissions, at low inertia and of low cost.

In a preferred form of-execution, the oscillating motion is obtained thanks to a crank type transmission, which takes the motion from a kinematic chain driving the first spider that carries the tumblers.

The transmission has a drive arm articulated around an eccentric axis on a part rotating in a continuous manner and that is eccentrically articulated to the axis of the second spider, or of the rotating part that constitutes the same.

Thanks to this device, the second spider is taken at high speed and with a minimum stroke alternatively in the position of engagement of the axial surface in shape of a circular sector with the corresponding cavity of the maltese cross and just as speedily oscillated backwards in the position of non interference. The synchronization is always precise with minimum tolerances.

The invention also allows to increase the number of tumblers in a simple manner, since the frequency of oscillation itself is also variable and adaptable in a simple manner.

Constructively the cost of the device according to the invention is limited and the operation is assured thanks to the great simplicity of the parts it is made of. In fact complex transmission of derivation and transformation of the motion are avoided for the second spider.

From the point of view of application to a making machine, the device according to the invention allows for the integration of the advantages inherent to a maltese type cross with double tumbler and with a drive by means of a transmission coupling that slows the rotation of the tumblers during the steps of advancement, slowing down during the dwell time with a double spider that contributes to give greater stability to the maltese type cross in the positions corresponding to the dwell times, avoiding that the inertial mass activated by the same involves in the long run a loss of precision in the position of dwell of the cross itself and all the problems of synchronization connected with this inconvenience. In fact it must be taken into account that generally in the dwell times of the maltese type cross and in some making machines, as for example the cigarette packing machines, in which the maltese type cross for example directly drives a wheel to form a packet or an inner envelope around the cigarettes, other operative units enter into play that carry out specific functions. In the example of the wheel for forming the packet or the inner wrap of the cigarettes, such functions can be for example the folding of the flaps of the wrapping sheet thanks to mobile folders, the sealing of the overlapping flaps or their gluing, sealing, or similar.

The features of the invention and the advantages derived from the same will be better evidenced from the following description of a non limiting executive example illustrated in the attached drawings, in where:
The Fig. 1 illustrates a schematic axial view of a device according to the invention.
The Fig. 2 illustrates in cross section and in linear progression the device according to the Fig. 1 and the transmissions and the kinematic drive chains.

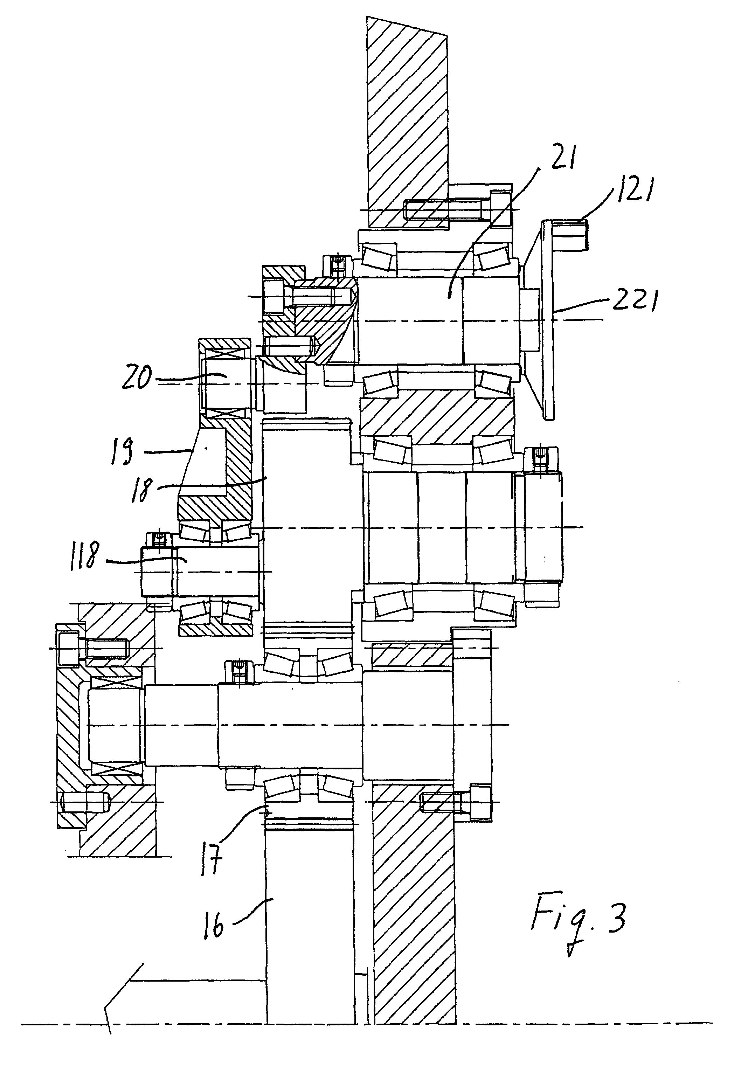

The Fig. 3 illustrates an enlarged detail of the Fig. 2 relative to the second tumbler.

With reference to the figures, a transmission device with double tumbler, double spider and maltese type cross, comprises a box 1 which houses a kinematic drive chain with an input shaft 2 that takes the motion from a drive unit not illustrated thanks to a first coupling 102. The opposite extremity of the input shaft 2 carries a coupling part 103 that engages with a complementary coupling part 203 foreseen coaxially integral on a gear 4. The first part 103 of the coupling integral with the shaft carries in radial position a roller 303 that is mounted revolving projecting axially from the head of the input shaft 2 and the axis of rotation of which is parallel to the axis of the rotation of the input shaft 2. On the radial opposite side the part 103 of the coupling 3 has a counterweight 303 to the roller 203. The complementary part of the coupling 3 associated with the first gear 4 has a radial track of engagement 403 of the roller 203 and a cavity housing the counterweight 303. The first gear 4 is foreseen coaxially to the input shaft 2. The coupling on the external end of the output shaft of the drive unit (not shown) can also be made in an analogous manner as described for the coupling 3.

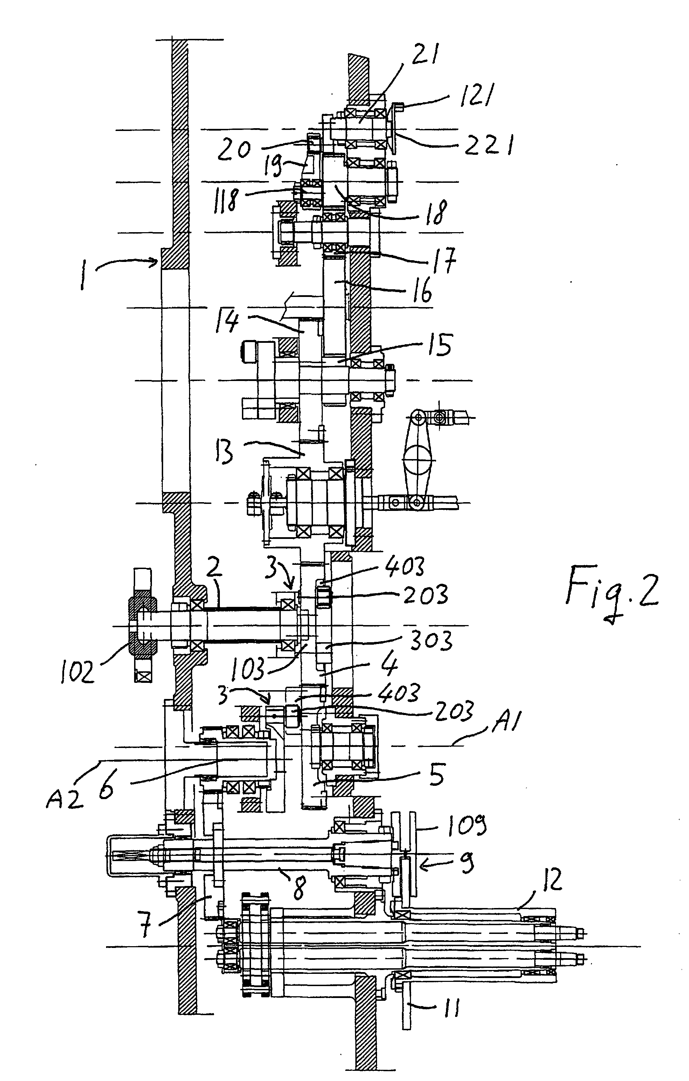

The gear 4 engages with a further gear 5 which drives a further transmission shaft 6. Then coupling between the gear 5 and the transmission shaft 6 is made by means of a coupling identical to the one previously described and indicated with 3. In this case, however, the axes of the gear 5 and of the shaft 6 are staggered between each other as indicated in Fig.2 with A1 and A2. The tracks 403 are in fact of a length such as to allow for an axial staggering of the said two axes, while the cavity associated with the counterweight is of dimensions such to guarantee the angular staggering of the two parts of the coupling that is the one associated with the shaft 6 and the one associated with the gear 5 in order to compensate the transversal staggering of the two axes A1, A2 of the said two parts. Thanks to this expedience, while the gear 5 and the transmission shaft 6 maintain a perfect synchronization within the range of one revolution, during the execution of the rotation the angular staggering of compensation of the relative misalignment between the shaft 6 and the gear 5 implies that the rotation of the shaft is not at a constant speed, but increases relative to and reduces relative to the angular speed of the gear.

The transmission shaft 6 has a pinion 106 that meshes with a larger gear 7 in order to obtain a reduction of the angular speed that in the example shown corresponds substantially to halving the angular speed. The gear 7 in its turn is coaxially keyed on the drive shaft 8 of a first spider 9 that has at the extremities of two opposed radial arms 109 respectively a roller 10 that form a double tumbler for the advancement of a maltese cross 11 mounted revolving around an axis parallel to the one of the first spider 9 and of the tumblers. The maltese type cross 11 is fixed coaxially on a drive shaft 12 of any given member as for example and in particular a wheel, a drum, or similar (not shown in detail) that can be carried by the shaft 12 itself.

The gear 4, transmits the motion thanks to a sequence of gears 13, 14, 15, 16, 17 to a gear 18 that has a stationary axis 118, in eccentric position and to which a transmission arm 19 is articulated. The other extremity of the transmission arm 19 is eccentrically articulated 20 to a shaft 21 that has at the opposite end a second spider formed by a part revolving coaxially with the shaft 21 and that has on the face turned towards the maltese cross a peripheral surface in shape of a short circular segment 121.

The rollers 10 of the tumbler cooperate with radial slots 111 of the maltese type cross 11 that are arranged equidistant and that have a depth substantially corresponding to the .total radial length of the arm 109 with the roller 9 and a width corresponding to the one of the rollers 10. Furthermore, the radially innermost end of the cavities 11 is circular and of a diameter corresponding to the one of the roller 10. The slots 111 of engagement of the rollers 10 are intercalated with cavities 211 in which the spiders 9, 21, 121 engage and that have an arcuated shape corresponding to the one of the radius of the surfaces in shape of a circular segment 121 of the spiders. The depth of said cavities 211 is smaller than the radius of the said surfaces in shape of a circular segment 121. Notwithstanding this is not made evident from the drawings, as it is generally common to all maltese crosses after all, the spider or spiders are all made in an analogous manner. The revolving part 9, 21 does not interfere with the cavities 211, while the surfaces in shape of a circular segment projecting axially from the said part 209 and 121 project axially inside of the cavities 211 themselves.

While the surfaces in shape of a circular segment 209 of the spider eventually associated with the tumbler has a fixed position relative to the tumblers and to the position of the surfaces in shape of a cicular segment 209, whereby during the step of advancement due to the driving action of the roller 10 on the arms 109 engaged in the associated slots 111, the spider 21 must execute a complex motion to ensure being in a position of non interference with the maltese cross 11 during the step of advancement. Such motion is already complex when the tumblers carry out a rotary motion at a speed constant during the entire revolution, but becomes still more complex to achieve when during the course of one turn the tumblers have different speeds of rotation according to the angle and the part of the distance covered.

The second spider 21 that has a short circular segment 121 cooperating with the cavities 211 of the maltese type cross and a crank type transmission, allows to make the spider or the circular segment 121 carry out an oscillatory motion. Therefore, the spider must not always carry out a whole revolution in order to assume the position of interference and of non interference, during the dwell sequence and the steps of advancement respectively, but is brought alternately in position of interference and position of non interference with the maltese type cross 11 thanks to an alternating motion. This allows to always ensure the correct synchronization between the maltese type cross, tumbler and second spider. The means thanks to which this result is obtained are simple, of low cost and of easy and reliable operation and assembly.

In the example shown, the misalignment between the transmission shaft 6 and gear 5 implies the fact that for part of a revolution the shaft 6 rotates faster than the gear 5, while for the remaining part rotates slower to reestablish the perfect synchronism at the beginning or at the end of a revolution. This expedient id advantageous in as much as it allows to carry cut the steps of advancement in a longer time thus reducing the accelerations and the decelerations and the maximum speed and the maximum torque.

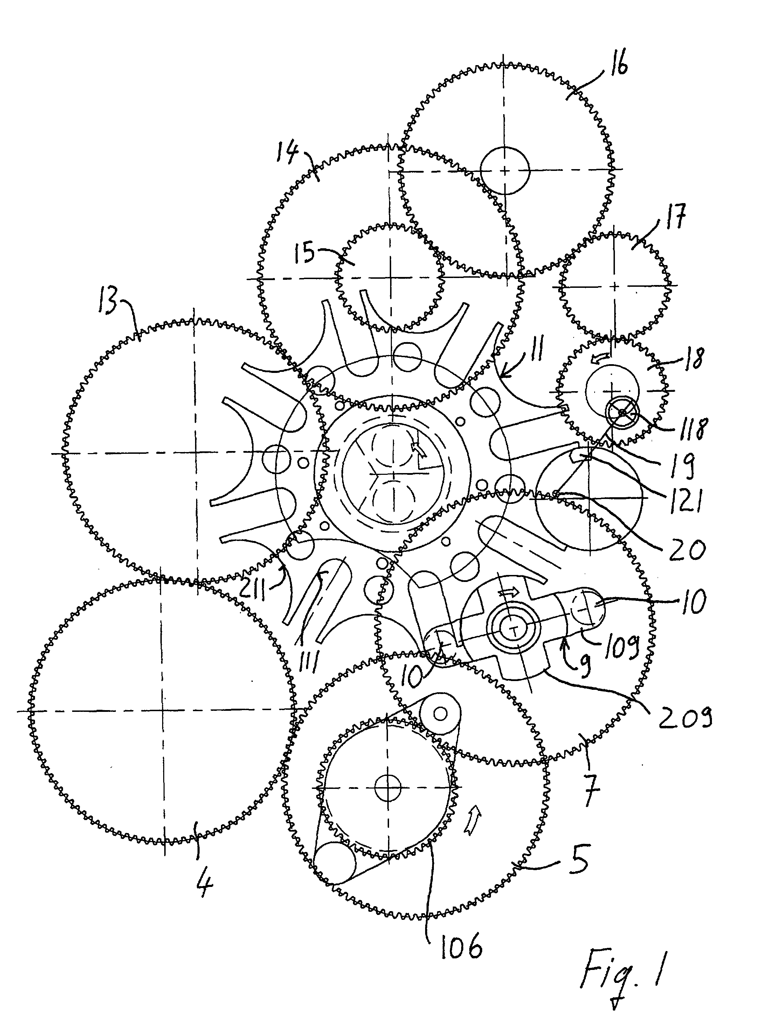

In combination, the use of the down gearing thanks to the couple pinion 7 and gear 8 and to the double tumbler that rotates at a speed substantially halved of the gear 8 not only contributes to increase the time of rotation of the maltese cross 11 during the step of advancement, but also reduces the speed of rotation of the tumblers with the derived advantages. With the device according to the invention according to what illustrated in the figures 1 and 2. it is possible to reserve for the execution of the step of advancement of the maltese type cross an angle of rotation of 270 degrees over the entire turn while the shaft of the drive units carries out a constant rotation at a constant angular speed of 230 degree.

The advantage for the kinematics and the dynamics of operation of the device is therefore evident.

With reference to the fact that in the executive form illustrated more couplings 3 of substantially identical type are provided and that it allows the misalignment of the shafts connected to each other, it becomes evident that the effect due to a particular construction of the coupling can eventually be amplified in particular when the number of turns is the same for each coupling and when the correct timing is applied.

Naturally the invention is not limited to what described and illustrated, but can be amply varied above all constructively. Thus in particular, the invention is not limited to the fact that it has a double tumbler, but the number can also be triple or a greater multiple. Also the eventual number of spiders can if necessary be greater.

## Claims

1. Transmission device for rotary motion in steps, in particular in the cigarette packing machines at high speed of operation, comprising one input shaft (2), a kinematic chain (3, 4, 5, 6, 7, 8) of transmission of the motion to a spider (9, 209) that carries at least two tumblers (9, 109, 209, 10), which cooperate with a maltese type cross (11), the said maltese type cross is connected dynamically to one or more operative parts (12) to be driven, wherein the spider (9, 209) cooperates with the maltese type cross (11) in the sense that it prevents the rotation in dynamically disengaged condition with one or more tumblers, and wherein a second spider (21, 121, 221) is associated with the maltese type cross (11) **characterized by** the fact that the second spider is given oscillating or rotary alternating motion between a position of engagement and a position of disengagement with the maltese type cross (11).

2. Device according to the claim 1, **characterized by** the fact that is has a rotary, part (221) with an acxially projecting surface (121) that is shaped in form of a circular segment and that cooperates with corresponding cavities (211) of the maltese type cross (11), which surface presents an angular extension of less than 90 degrees, while the rotary part (221) is activated in oscillating motion around it own axis.

3. Device according to the claims 1 and 2, **characterized by** the fact that the oscillating motion of the second spider (21, 121, 221) is obtained thanks to a transmission of transformation (18, 118, 19, 20, 21) of a monodirectional continuous rotary motion into a alternating rotary motion.

4. Device according to one or more of the preceding claims, **characterized by** the fact that the tumblers (109, 10) are driven in a rotary manner with a transmission (3, 103, 203, 303, 403) that slows down the speed of rotation of the same and therefore the step of advancement of the maltese type cross (11) over a preset angular track within the range of one revolution increasing it over the remaining part of the revolution.

5. Device according to claim 4, **characterized by** the fact that said transmission is formed by a non homokinetic coupling (3).

6. Device according to the claim 5, **characterized by** the fact that between two dynamically linked parts (5, 6) of the kinematic drive chain of the multiple tumbler (109, 10), a coupling (3) is provided with coupling parts (103, 403)- that have a degree of radial freedom and a degree of angular freedom, the two parts (5, 6) of the kinematic chain and the associated parts of the coupling (3) being arranged with their axes of rotation radially staggered between each other.

7. Device according to one or more of the preceding claims, **characterized by** the fact that the coupling (3) comprises a radial arm (3) rotary wise integral with the part (6) of the kinematic chain, which radial arm carries a peripheral roller (203) axially projecting in position of engagement in a radial track (403) and against a radial rib on the other side of the coupling (3) associated with the other part (5) of the kinematic chain.

8. Device according to one or more of the preceding claims, **characterized by** the fact that the alternating rotary motion of the second spider (21, 121, 221) is obtained thanks to a crank type transmission (18, 118, 19, 20, 21), that derives the motion from the kinematic drive chain of the first spider and of the tumblers (9,109, 209, 10).

9. Device according to the claim 8, **characterized by** the fact that the drive transmission with alternating rotary motion or oscillating motion has a drive arm (19) articulated around an eccentric axis (118) on a part (18) rotating in a continuous manner and that is articulated eccentrically (20) relative to the axis of oscillation of the same on the second spider (21, 12, 221), or of the rotary part that forms the same.

10. Device according to one or more of the preceding claims, **characterized by** the fact that it comprises:
a) two tumblers carried diametrically opposed, or with a phase of 180 degrees coaxially on the same drive shaft (8) rotating in a continuous manner and engaging in sequence and alternatively between themselves with the maltese cross (11);
b) a transmission (3) that gives speeds of rotation different between each other for two diverse and complementary angles of rotation of the drive shaft (8) of the tumblers (109, 10) within the range of one revolution and such, whereby the tumblers rotate slower during the step of advancement of the maltese type cross (11) than during the dwell sequence;
e) A transmission for down gearing of the speed of rotation of the tumblers (109, 10) with a preset ratio.

11. Device according to the claim 10, **characterized by** the fact that the ratio of transmission of the down gearing transmission (106, 7) is inverse to the number of tumblers.

12. Device according to the claim 11, **characterized by** the fact that the tumbler is double and the ratio of transmission of the down gearing transmission (106, 7) is such as to halve the number of revolutions.

## Patentansprüche

1. Transmissionsvorrichtung für abgestufte Drehbewegungen, insbesondere zum Einsatz in Zigarettenpackmaschinen bei hoher Betriebsgeschwindigkeit, mit einer Antriebswelle (2) und einer kinematischen Kette (3, 4, 5, 6, 7, 8) zur Übertragung der Bewegung auf eine Läufernabe (9, 209), die mindestens zwei Wippen (9, 109, 209, 10) bewegt, die mit einem Malteserkreuz (11) zusammenwirken, wobei dieses Malteserkreuz dynamisch mit einem oder mehr anzutreibenden beweglichen Teilen (12) verbunden ist und wobei die Läufernabe (9, 209) mit dem Malteserkreuz (11) so zusammenwirkt, dass sie in dynamisch entkuppeltem Zustand mit einer oder mehr Wippen die Drehbewegung unterbindet, und wobei eine zweite Läufernabe (21, 121, 221) mit dem Malteserkreuz (11) zusammenwirkt, **dadurch gekennzeichnet, dass** die zweite Läufernabe sich in schwingender oder drehender Weise alternierend zwischen einer eingekuppelten und einer entkuppelten Position mit dem Malteserkreuz (11) bewegt.

2. Vorrichtung gemäß Anspruch 1, **dadurch gekennzeichnet, dass** daran ein drehendes Teil (221) mit einer axial vorstehenden Fläche (121) vorgesehen ist, das die Form eines kreisförmigen Segments hat und das mit den entsprechenden Ansnehmungen (211) des Malterkreuzes (11) zusammenwirkt, wobei die genannte Fläche eine winklige Fortsetzung von weniger als 90 Grad aufweist, während das drehende Teil (221) sich in schwingender Weise um seine eigene Achse bewegt.

3. Vorrichtung gemäß Anspruch 1 und 2, **dadurch gekennzeichnet, dass** die schwingende Bewegung der zweiten Läufernabe (21, 121, 221) durch die Übertragung der Umwandlung (18, 118, 19, 20, 21) einer kontinuierlichen, in einer Richtung verlaufenden Drehbewegung in eine Drehbewegung in verschiedene Richtungen erzielt wird.

4. Vorrichtung gemäß einem oder mehreren der vorstehenden Ansprüche, **dadurch gekennzeichnet, dass** die Wippen (109, 10) in drehender Weise mit einer Transmissionsvorrichtung (3, 103, 203, 303, 403) angetrieben werden, die deren Drehgeschwindigkeit mindert und damit die Vorwärtsbewegung des Malteserkreuzes (11) über eine eingestellte winklige Spur innerhalb einer Umdrehung reduziert, wobei sie über den restlichen Teil der Umdrehung verstärkt wird.

5. Vonichtung gemäß Anspruch 4, **dadurch gekennzeichnet, dass** diese Transmissionsvorrichtung durch eine nicht homokinetischen Kupplung (3) gebildet wird.

6. Vorrichtung gemäß Anspruch 5, **dadurch gekennzeichnet, dass** zwischen zwei dynamisch verbundenen Teilen (5, 6) der kinematischen Antriebskette der aus mehreren Teilen bestehenden Wippen (109, 10) eine Kupplung mit Kupplungsteilen (103, 403) vorgesehen ist, wobei diese Kupplungsteile eine gewisse Radius- und eine gewisse Winkelfreiheit haben und wobei die beiden Teile (5, 6) der kinematischen Kette und der entsprechenden Teile der Kopplung (3) so angeordnet werden, dass ihre Rotationsachsen zueinander radial versetzt sind.

7. Vorrichtung gemäß einem oder mehrerer der vorstehenden Ansprüche, **dadurch gekennzeichnet, dass** zu der Kupplung (3) ein Kadialarm (3) gehört, der in Bezug auf die Drehung mit dem Teil (6) der kinematischen Kette integriert ist, wobei dieser Radialarm mit einer peripheren Walze (203) versehen ist, die sich in eingekuppelter Position axial in einer radialen Spur (403) erstreckt und gegen einen radialen Steg an der entgegengesetzten Seite der Kopplung (3) lehnt, die zum anderen Teil (5) der kinematischen Kette gehört.

8. Vorrichtung gemäß einem oder mehrerer der vorstehenden Ansprüche, **dadurch gekennzeichnet, dass** die in verschiedene Richtungen erfolgende Drehbewegung der zweiten Läufernabe (21, 121, 221) durch eine Kurbeltransmission (18, 118, 19, 20, 21) erzielt wird, deren Bewegung von der kinematischen Antriebskette der ersten Läufernabe und den Wippen (9, 109, 209, 10) stammt.

9. Vorrichtung gemäß Anspruch 8, **dadurch gekennzeichnet, dass** die Antriebstransmission mit der schwingenden Bewegung oder der Drehbewegung in verschiedene Richtungen mit einem Antriebsarm (19) versehen ist, der um eine exzentrische Achse (118) an einem sich kontinuierlich drehenden Teil (18) angelenkt ist, wobei das genannte Teil exzentrisch (20) im Verhältnis zur seiner Schwingungsachse an der zweiten Läufemabe (21, 121, 221) angelenkt ist, oder der Schwingungsachse des drehenden Teils, aus dem es besteht.

10. Vorrichtung gemäß einem oder mehrerer der vorstehenden Ansprüche, **dadurch gekennzeichnet, dass** sie folgende Teile beinhaltet:
a) zwei Wippen, die sich diametral gegenüber angeordnet sind, oder die mit einer Phase von 180 Grad koaxial auf der selben Antriebswelle sitzen (8), und die sich kontinuierlich drehen und nacheinander und abwechselnd mit dem Malteserkreuz (11) einkuppeln;
b) eine Transmissionsvorrichtung (3), die während einer Umdrehung jeweils unterschiedliche Drehgeschwindigkeiten für zwei verschiedene und einander ergänzende Drehwinkel der Antriebswelle (8) der Wippen (109, 10) vorgibt, wodurch die Wippen sich während der Vorwärtsbewegung des Malteserkreuzes (11) langsamer drehen als während der Verweilzeit;
c) Eine Transmissionsvorrichtung zur Verminderung der Drehgeschwindigkeit der Wippen (109, 20) in einem einstellbaren Verhältnis.

11. Vorrichtung gemäß Anspruch 10, **dadurch gekennzeichnet, dass** das Transmissionsverhältnis der Verminderungs-Transmission (106, 7) umgekehrt zur Anzahl der Wippen ist.

12. Vorrichtung gemäß Anspruch 11, **dadurch gekennzeichnet, dass** die Anzahl der Wippen doppelt so hoch ist und das Transmissionsverhältnis der Verminderungs-Transmission (106, 7) so gewählt ist, dass die Anzahl der Umdrehungen halbiert wird.

## Revendications

1. Dispositif de transmission d'un mouvement de rotation par étapes, en particulier dans les machines de conditionnement de cigarettes à vitesse de fonctionnement élevée, comportant un arbre d'entrée (2), une chaîne cinématique (3, 4, 5, 6, 7, 8) de transmission du mouvement à un croisillon (9, 209) qui supporte au moins deux satellites (9, 109, 209, 10), qui coopère avec une croix de type croix de Malte (11), ladite croix du type croix de Malte est connectée de manière dynamique à une ou plusieurs parties opérationnelles (12) devant être entraînées, le croisillon (9, 209) coopérant avec la croix de type croix de Malte (11) en ce sens qu'il empêche la rotation dans un état libéré de manière dynamique d'un ou plusieurs satellites, et un second croisillon (21, 121, 221) étant associé à la croix de type croix de Malte (11), **caractérisé en ce que** le second croisillon est doté d'un mouvement alterné d'oscillation ou de rotation entre une position de mise en prise avec la croix de type croix de Malte (11), et une position de libération à partir de celle-ci.

2. Dispositif selon la revendication 1, **caractérisé en ce qu'**il existe une partie de rotation (221) ayant une surface faisant saillie axialement (121) qui a la forme d'un segment circulaire, et qui coopère avec des cavités correspondantes (211) de la croix de type croix de Malte (11), laquelle surface présente un prolongement angulaire inférieur à 90 degrés, tandis que la partie de rotation (221) est activée dans un mouvement d'oscillation autour de son propre axe.

3. Dispositif selon les revendications 1 et 2, **caractérisé en ce que** le mouvement d'oscillation du second croisillon (21, 121, 221) est obtenu grâce à une transmission de transformation (18, 118, 19, 20, 21) d'un mouvement de rotation continu monodirectionnel en un mouvement de rotation alternée.

4. Dispositif selon l'un quelconque des revendications précédentes, **caractérisé en ce que** les satellites (109, 10) sont entraînés d'une manière rotative à l'aide d'une transmission (3, 103, 203, 303, 403) qui ralentit la vitesse de rotation de ceux-ci et, par conséquent, l'étape d'avancée de la croix de type croix de Malte (1), sur une piste angulaire préétablie située dans la plage d'une révolution, en l'augmentant sur la partie restante de la révolution.

5. Dispositif selon la revendication 4, **caractérisé en ce que** ladite transmission est formée par un couplage non-homocinétique (3).

6. Dispositif selon la revendication 5, **caractérisé en ce que**, entre deux parties reliées de manière dynamique (5, 6) de la chaîne d'entraînement cinématique du satellite multiple (109, 10), un couplage (3) est muni de parties de couplage (103, 403) qui ont un degré de liberté radiale et un degré de liberté angulaire, les deux parties (5, 6) de la chaîne cinématique et les parties associées du couplage (3) étant agencées en ayant leurs axes de rotation étagés radialement les uns par rapport aux autres.

7. Dispositif selon l'une quelconque des revendications précédentes, **caractérisé en ce que** le couplage (3) comporte un bras radial (3) pouvant tourner en un seul bloc avec la partie (6) de la chaîne cinématique, lequel bras radial porte un rouleau périphérique (203) faisant saillie axialement en position de mise en prise dans une piste radiale (403) et contre une nervure radiale sur l'autre côté du couplage (3) associé à l'autre partie (5) de la chaîne cinématique.

8. Dispositif selon l'une quelconque des revendications précédentes, **caractérisé en ce que** le mouvement alterné de rotation du second croisillon (21, 121, 221) est obtenu grâce à une transmission de type manivelle (18, 118, 19, 20, 21), qui obtient le mouvement à partir de la chaîne d'entraînement cinématique du premier croisillon et des satellites (9, 109, 209, 10).

9. Dispositif selon la revendication 8, **caractérisé en ce que** la transmission d'entraînement ayant un mouvement alterné de rotation ou un mouvement d'oscillation a un bras d'entraînement (19) articulé autour d'un axe excentré (118) situé sur une partie (18) tournant d'une manière continue, et qui est articulé de manière excentrée (20) par rapport à son axe d'oscillation sur le second croisillon (21, 12, 221), ou de la partie de rotation qui le forme.

10. Dispositif selon l'une quelconque des revendications précédentes, **caractérisé en ce qu'**il comporte
a) deux satellites supportés de manière diamétralement opposée, ou ayant une phase de 180 degrés, situés coaxialement sur le même arbre d'entraînement (8) tournant d'une manière continue, et venant en prise en séquence et en alternance entre ceux-ci avec la croix de Malte (11),
b) une transmission (3) qui donne des vitesses de rotation différentes les unes par rapport aux autres pour deux angles de rotation différents et complémentaires de l'arbre d'entraînement (8) des satellites (109, 10) dans la plage d'une révolution et plus, de sorte que les satellites tournent plus lentement durant l'étape d'avancée de la croix de type croix de Malte (11) que durant la séquence de temps d'arrêt,
c) une transmission pour réduire la vitesse de rotation des satellites (109, 10) à un rapport préétabli.

11. Dispositif selon la revendication 10, **caractérisé en ce que** le rapport de transmission (106, 7) pour réduire est inverse au nombre de satellites.

12. Dispositif selon la revendication 11, **caractérisé en ce que** le satellite est double, et le rapport de transmission de la transmission (106, 7) pour réduire est tel qu'il divise par deux le nombre de révolutions.
